Europäisches Patentamt

(19) European Patent Office

Office européen des brevets

(11) EP 0 931 781 A1

(12) DEMANDE DE BREVET EUROPEEN

(43) Date de publication:
28.07.1999 Bulletin 1999/30

(51) Int. Cl.⁶: C04B 35/83, C04B 41/88

(21) Numéro de dépôt: 98400049.7

(22) Date de dépôt: 13.01.1998

(84) Etats contractants désignés:
AT BE CH DE DK ES FI FR GB GR IE IT LI LU MC NL PT SE
Etats d'extension désignés:
AL LT LV MK RO SI

(30) Priorité: 08.01.1998 FR 9800137

(71) Demandeur:
AEROSPATIALE Société Nationale Industrielle
75781 Paris Cédex 16 (FR)

(72) Inventeurs:
• Colin, Christophe
  33160 Saint Medard en Jalles (FR)
• Rousseau, Gérard
  33160 Saint Aubin de Medoc (FR)
• Larnac, Guy
  33160 Saint Aubin de Medoc (FR)
• Le Vacon, Philippe
  78280 Gyancourt (FR)

(74) Mandataire: Dubois-Chabert, Guy
  Société de Protection des Inventions
  25, rue de Ponthieu
  75008 Paris (FR)

(54) **Utilisation d'un matériau composite à renfort carboné et matrice mixte carbone-metal pour la réalisation de composants de plates-formes, satellites et engins spatiaux**

(57) L'invention concerne l'utilisation d'un matériau composite comprenant un renfort fibreux de fibres carbonées disposé dans une matrice mixte comprenant un premier constituant carboné et un second constituant métallique, par exemple l'aluminium ou un alliage aluminium-magnésium, pour la réalisation de composants, exposés ou non à l'oxygène monoatomique, satellites, plates-formes et engins spatiaux.

Ce composé comprend de préférence 40 à 70 % de renfort fibreux, 10 à 45 % du premier constituant carboné et 5 à 35 % du second constituant métallique.

## Description

La présente invention a pour objet l'utilisation d'un matériau composite à renfort carboné pour des applications spatiales nécessitant une stabilité dimensionnelle importante et une résistance à l'oxygène atomique.

Elle concerne plus particulièrement l'utilisation de tels matériaux pour la réalisation de composants de satellites, plates-formes et engins spatiaux en orbite basse.

Ces composants peuvent être par exemple des structures de support exposées ou non à l'oxygène monoatomique présent dans l'espace à basse altitude, des boucliers, des barres de treillis, et des supports de miroir.

Dans le cas, des plates-formes spatiales à vocation optique, ces composants peuvent être en particulier les structures de support d'instruments d'optique tels que les télescopes d'observation spatiale, qui nécessitent des performances de plus en plus élevées.

Le marché de ces futurs télescopes d'observation montre que les matériaux composites utilisés devront posséder des stabilités dimensionnelles encore plus grandes et posséder les propriétés suivantes :

- un coefficient de dilation thermique très proche de 0 ($\alpha < 10^{-7} {}^\circ C^{-1}$) dans le sens X ;
- un module élastique le plus élevé possible ;
- une conductivité thermique importante ; et
- une valeur de contrainte en cisaillement interlaminaire comparable à celle mesurée sur les matériaux composites organiques.

Par ailleurs, dans les conditions d'environnement spatial en orbite basse (200 à 1 000 km), certains composants doivent résister à l'action de l'oxygène atomique capable de dégrader de nombreux matériaux.

### Etat de la technique antérieure

Parmi les matériaux susceptibles de présenter ces propriétés, on connaît des matériaux composites du type carbone-carbone, c'est-à-dire à renfort fibreux carboné dans un matrice de carbone. De tels matériaux présentent une isotropie des propriétés, une densité faible et, lorsqu'ils sont réalisés à partir de fibres de carbone de haute résistance (HR), un coefficient de dilation thermique proche de 0, mais leurs performances sont limitées par leur faible niveau de conductivité thermique, leur module élastique faible (E < 60 Gpa) du fait de l'utilisation de fibres de carbone de haute résistance (HR) et leur contrainte en cisaillement interlaminaire insuffisante.

Des matériaux composites de ce type sont décrits par exemple dans FR-A-2 668 479 et FR-A-2 669 623.

Plus récemment, on a proposé d'autres matériaux composites comportant un renfort fibreux carboné associé à une matrice métallique, par exemple à base de magnésium, comme il est décrit dans FR-A-2 695 409 et FR-A-2 698 582. De tels matériaux ont des propriétés mécaniques intéressantes, une conductivité thermique élevée, mais leur stabilité dimensionnelle est insuffisante en raison du coefficient de dilatation thermique élevé de la matrice métallique. Par ailleurs, ils sont sensibles à la corrosion atmosphérique.

### Exposé de l'invention

La présente invention a précisément pour objet l'utilisation d'un matériau composite à renfort carboné pour la réalisation de composants, exposés ou non à l'oxygène atomique, de plates-formes, satellites ou autres engins spatiaux.

Selon l'invention, le matériau composite utilisé comprend un renfort fibreux de fibres carbonées disposé dans une matrice mixte comprenant un premier constituant carboné et un second constituant métallique.

Selon l'invention, le second constituant métallique peut être n'importe quel type de métal, d'alliage métallique ou de composé intermétallique. On peut utiliser en particulier l'aluminium, le magnésium, le cuivre et leurs alliages ainsi que les composés intermétalliques du type AlNi, TiAl. Des alliages susceptibles de convenir sont les alliages aluminium-magnésium et les alliages magnésium-zirconium.

Pour des composants exposés à l'oxygène atomique, on peut utiliser en particulier l'aluminium ou un alliage aluminium-magnésium contenant 10 % en poids de magnésium.

Dans le matériau composite utilisé dans l'invention, l'adjonction d'un constituant métallique à la matrice carbonée permet d'améliorer les performances du matériau composite, notamment en ce qui concerne son coefficient de dilation thermique, sa conductivité thermique et ses propriétés mécaniques.

En effet, l'introduction d'un constituant métallique à fort coefficient de dilation thermique dans un matériau composite du type carbone-carbone qui possède un coefficient de dilation thermique négatif, permet d'augmenter ce coefficient de dilation thermique pour atteindre la valeur requise, proche de 0, pour les applications requérant une grande stabilité, dans le domaine spatial.

De plus, grâce à l'adjonction de ce constituant métallique, on peut utiliser des fibres de carbone à haut module et à très haut module car on peut compenser la forte négativité de leur coefficient de dilation thermique en jouant sur la teneur en constituant métallique de la matrice et obtenir de ce fait un module élastique plus élevé. Par ailleurs, l'addition d'un constituant métallique de conductivité élevée, permet d'augmenter la conductivité thermique du matériau.

Enfin, l'adjonction de ce constituant métallique permet de limiter les interactions de l'oxygène atomique avec ce matériau et de le rendre pratiquement inerte vis-à-vis de l'oxygène atomique dans des conditions d'environnement spatial en orbite basse.

Les objets se trouvant en orbite sont soumis à des bombardements de rayonnements U.V., de particules chargées (électrons et protons) possédant des énergies de $10^3$ à $10^6$ eV, ainsi qu'à l'oxygène monoatomique. Pour les satellites d'observations qui sont situés en orbite basse les particules chargées sont peu actives, sauf dans les zones de pôles. A basse altitude l'espèce prédominante est l'oxygène (80 % $O_2$, 20 % $N_2$). Sous l'effet du rayonnement ultra violet l'oxygène diatomique $O_2$ est dissocié pour former l'oxygène monoatomique neutre activé O.

La quantité d'oxygène atomique dépend de l'activité solaire dont la périodicité est d'environ 11 ans. Plus on est situé à des altitudes élevées, plus la sensibilité à l'activité solaire est importante. Bien que les concentrations en oxygène soient relativement faibles à ces altitudes (flux de $4.10^{12}$ à $4.10^{15}$ atomes cm$^{-2}$ sec$^{-1}$ à des altitudes de 200 et 600 km), la vitesse des objets en orbite basse ($\sim$6-8 Km.sec$^{-1}$) conduit à des énergies de collision de l'ordre de 5 eV. Ces collisions se produisent de façon directionnelle par rapport au vecteur vitesse du véhicule ou du satellite. Les interactions avec la surface peuvent consister en des dégrations de surface par érosion. Les matériaux présentent des modifications de l'aspect de leur surface du fait d'un effet de piqûre (oxydation) à l'échelle nanométrique, pouvant conduire, pour les matériaux les plus sensibles ou les plus fins à une disparition totale selon la durée du séjour en orbite. Diverses réactions du type addition, élimination... peuvent se produire qui conduisent à une altération du réseau organique et une dégradation du matériau.

Avec le matériau composite utilisé, dans l'invention, la présence de métal dans la matrice du matériau permet d'éviter l'influence néfaste de ces interactions en raison d'une passivation de la surface du matériau composite par formation d'un oxyde de ce métal.

Ainsi, le choix du constituant métallique utilisé pour la matrice et sa teneur dans le matériau composite permettent d'obtenir un matériau présentant les propriétés voulues pour les applications spatiales.

Généralement, la teneur en constituant métallique du matériau composite est de 0,5 à 60 % en volume par rapport au volume dudit matériau.

Selon un mode de réalisation préféré de l'invention, le matériau composite comprend en volume :

- 40 à 70 % de renfort fibreux,
- 10 à 45 % du premier constituant carboné de la matrice , et
- 5 à 35 % du second constituant métallique de la matrice.

En particulier, la teneur en second constituant métallique de la matrice est choisie de façon telle que le coefficient de dilation thermique du composite soit de 0 à $10^{-7}$°C$^{-1}$ dans le sens X.

A titre d'exemple de matériau répondant à cette caractéristique, on peut citer le matériau comprenant 57 % de fibres de carbone provenant de brai, 13 % de constituant carboné formé par pyrolyse et graphitation d'une résine formophénolique et 30 % d'alliage d'aluminium et de magnésium comprenant 10 % en poids de magnésium.

Dans le cas de composants exposés à l'oxygène monoatomique, on utilise de préférence un matériau comprenant 60 % de fibres de carbone, 14 % de matrice carbonée et 26 % d'alliage d'aluminium et de magnésium comprenant 10 % en poids de magnésium.

Dans le matériau composite de l'invention, le renfort fibreux est constitué de fibres carbonées qui peuvent être des fibres de carbone, ou des fibres de carbone recouvertes d'une couche de carbure ou de carbonitrure de silicium.

Lorsqu'on utilise des fibres de carbone, celles-ci peuvent être des fibres longues de carbone de type haute résistance (HR), haut module (HM) ou très haut module (THM), fabriquées à partir de divers précurseurs. De préférence, on utilise des fibres de carbone fabriquées, soit à partir de précurseurs polyacrylonitrile (fibres ex-PAN), soit à partir d'un précurseur brai de pétrole ou de houille (fibres exbrai).

Dans le renfort fibreux, les fibres peuvent être unidirectionnelles (UD), c'est-à-dire que toutes les fibres sont orientées dans la même direction, ou quasi-unidirectionnelles, quelques fibres étant dans le sens travers à 90° pour maintenir le renfort. On peut aussi utiliser des renforts formés de fibres, bidirectionnelles (2D), tridirectionnelles (3D) et multidirectionnelles. Dans le cas d'un renfort fibreux formé de fibres bidirectionnelles, celles-ci peuvent être constituées de nappes unidirectionnelles empilées, disposées alternativement selon deux directions. On peut aussi utiliser des renforts fibreux constitués par des armatures tissées telles que celle décrite dans FR-A-2 610 951 que l'on désigne généralement par l'abréviation 2,5 D, ou celle décrite dans FR-A-2 612 950 que l'on désigne généralement par l'abréviation 3D evo.

Le constituant carboné de la matrice est généralement du carbone obtenu, soit par voie liquide par pyrolyse et graphitation de précurseurs constitués par des résines organiques thermodurcissables et/ou par du brai, soit par voie gazeuse par dépôt de pyrocarbone et graphitation.

Le matériau composite peut être fabriqué aisément à partir d'une préforme de matériau composite poreuse du type carbone-carbone comportant un renfort fibreux de fibres carbonées disposé dans une matrice du premier constituant carboné, ayant une porosité de 0,5 à 60 %, par introduction du second constituant métallique dans la porosité de cette préforme pour la remplir au moins en partie de ce second constituant métallique.

La préforme poreuse peut être préparée par des techniques classiques de dépôt de carbone dans un renfort fibreux. De préférence, la préforme est obtenue en réalisant un ou plusieurs cycles d'imprégnation d'un renfort fibreux de fibres carbonées au moyen de précurseurs du constituant carboné de la matrice.

Ces précurseurs peuvent être soit des résines organiques thermodurcissables, soit du brai, soit un gaz d'hydrocarbure qui donnera par pyrolyse du pyrocarbone.

Ainsi, pour la réalisation de la préforme poreuse, on part de fibres de carbone unidirectionnelles, quasi unidirectionnelles ou multidirectionnelles, sous forme de substrat tissé ou non tissé, qui constitueront le renfort du matériau composite, et on forme dans ce renfort la matrice de carbone.

Généralement les fibres de carbone commerciales sont destinées à la réalisation de composites à matrice organique pour lesquels des liaisons fibre-matrice fortes sont nécessaires. Aussi le fabriquant de fibres greffe à la surface des fibres des groupes fonctionnels -C-OH, -C = o et -COOH de façon à permettre la formation de liaisons fortes avec les plastiques. Dans le cas des matériaux composites de l'invention qui sont des composites carbone-carbone, des liaisons fibre-matrice fortes conduisent à des matériaux fragiles, ce qui n'est pas souhaitable. Aussi, avant de réaliser le matériau composite, on préfère donc éliminer les fonctions oxhydryles à la surface de fibres. Ceci peut être effectué par un traitement thermique, par exemple vers 900°C sous atmosphère neutre. On peut aussi procéder par ailleurs à un désensimage des fibres par lavage dans de l'acétone. Cet ensimage est un revêtement organique de surface appliqué pour faciliter la manipulation des mèches, qui n'est pas souhaitable dans le cas des composites carbone-carbone. Après cette étape préalable, on peut former la matrice carbonée autour du renfort fibreux, à partir de résines organiques, à partir de brai ou à partir des deux.

En effet, selon l'invention, on peut réaliser un ou plusieurs cycles d'imprégnation du renfort fibreux, chaque cycle comportant une étape d'imprégnation du renfort fibreux au moyen d'un résine organique ou de brai, suivie d'une étape de pyrolyse.

Après ce ou ces cycles d'imprégnation, on réalise ensuite une graphitation, soit un traitement thermique sous gaz neutre à une température de 1600 à 2600°C.

Les conditions utilisées pour les étapes d'imprégnation et de pyrolyse du ou des cycles d'imprégnation dépendent en particulier du précurseur utilisé comme on le verra plus loin.

1) Densification à partir de résines organiques

Les résines organiques thermodurcissables sont des précurseurs par pyrolyse de carbone vitreux isotrope et de faible densité. Cependant, le rendement en carbone varie beaucoup selon la nature du squelette carboné du polymère de départ. Lors de l'élévation de la température, les liaisons de plus en plus fortes sont progressivement rompues : d'abord les liaisons entre chaînes de polymères, puis les liaisons de groupements aliphatiques qui perdent leurs hétéroatomes, et enfin les liaisons intramoléculaires aliphatiques qui se réorganisent en se déshydrogénant pour donner des structures carbonées aromatiques de plus en plus denses.

Le rendement en carbone est d'autant plus élevé que le polymère est constitué de molécules plus stables (aromatiques) et plus ramifiées avec des liaisons plus fortes (aromatiques). Le meilleur résultat est obtenu avec des molécules infinies dites réticulées qui sont aussi infusibles.

Ces polymères sont produits généralement par des réactions de condensation et développent des molécules s'étendant dans les trois directions de l'espace. C'est le cas des résines phénoliques de type résol et des résines furaniques. Dans le cas des résines phénoliques, le rendement en coke est d'environ 56 %.

La nature amorphe du carbone ainsi produit résulte de la conservation, lors du processus de pyrolyse, d'une grande partie du squelette carboné non ordonné du polymère d'origine, ainsi que de l'absence de mobilité des atomes de carbone. Le carbone vitreux est constitué de très petits domaines graphitiques (USB formés d'empilements de plans graphitiques sur des distances très courtes de l'ordre de quelques noyaux aromatiques) reliés sans ordre à grande distance et laissant entre eux une microporosité importante. La densité du coke est d'environ 1,54, densité inférieure à celle du graphite qui est de 2,25. Le coke vitreux n'est pas graphitable, c'est-à-dire que par traitement à haute température, par exemple à une température supérieure à 2400°C, les atomes de carbone n'acquièrent pas une mobilité suffisante pour se réorganiser et donner du graphite.

Dans le cas de ces résines organiques, l'étape de densification comporte plusieurs étapes qui sont :

-   a) la formation de la forme en carbone/résine,

- b) la pyrolyse de la forme en carbone/résine,
- c) un traitement thermique de stabilisation.

La première étape comporte deux variantes selon le type de substrat fibreux mis en oeuvre. Dans le cas d'un substrat tissé (type 2,5D et 3D) les opérations sont les suivantes :

n°1 : mise en outillage du substrat de façon à maintenir sa forme.
n°2 : imprégnation par la résine liquide (ou en solution) par la méthode vide/pression.
n°3 : polymérisation de la résine.

Dans le cas d'un substrat 2D réalisé par drapage de tissus, les opérations suivantes sont réalisées :

n°1 : réalisation d'un préimprégné avec la résine. Le préimprégné est obtenu par trempage du tissu dans la résine liquide ou en solution, essorage, séchage, puis pré-polymérisation de la résine (gélification) pour l'amener dans un état lui permettant de coller sans couler.
n°2 : drapage des tissus sur une forme et mise sous vessie.
n°3 : polymérisation sous vide et pression externe en autoclave.

2) Densification à partir de brai

Le brai est le résidu final du processus de distillation des pétroles ou des goudrons de houille. Il est constitué d'un mélange complexe de molécules aromatiques lourdes ayant de 3 à plusieurs dizaines de noyaux aromatiques. C'est de ce fait un matériau thermoplastique avec un comportement du verre caractérisé par son point de ramollissement.

La pyrolyse du brai se réalise en phase liquide. A mesure que la température s'élève, les premières cassures de molécules interviennent pour les liaisons les moins stables. Il se produit alors une recombinaison (condensation) de ces éléments conduisant à des molécules de plus en plus lourdes et aromatiques, donc plus stables.

Les molécules aromatiques constituent des plans. A partir d'une certaine dimension, ils s'ordonnent entre eux en se rapprochant et en s'orientant parallèlement, constituant ainsi des petits domaines de semi-cristaux (cristaux liquides). Ces domaines de cristaux liquides s'organisent sous forme de sphères (mésophases) dispersées dans la phase isotrope. Ces sphères croissent peu à peu aux dépens de la phase isotrope, puis coalescent jusqu'à envahir complètement tout le domaine vers 450°C. Celui-ci est alors sous forme solide et constitue le semi-coke.

La particularité du coke de brai est donc son caractère anisotrope avec une organisation prégraphitique. Par traitement ultérieur à haute température, cette organisation imparfaite s'améliore jusqu'à donner une structure graphitique presque parfaite sur de larges domaines avec une densité proche de celle du graphite (2,25).

Cependant, d'un point de vue technologique, l'inconvénient du brai est son caractère thermoplastique. Celui-ci est responsable d'un rendement volumique en coke extrêmement faible par suite du moussage du brai lors de la pyrolyse. Cette difficulté peut être contournée en réalisant une pyrolyse sous pression isostatique dans des hyperclaves, dont la pression est d'environ 100 MPa. Ce procédé est coûteux et limite les dimensions des pièces réalisables.

Selon l'invention, on évite l'utilisation de l'hyperclave en utilisant un procédé de densification du brai sans pression.

Dans ce cas, le procédé de fabrication du matériau composite comportant un renfort fibreux et une matrice carbonée formée à partir de brai, comprend les étapes suivantes :

- imprégnation du renfort fibreux par du brai liquéfié ou en solution dans un solvant,
- traitement thermique du renfort fibreux imprégné à une température de 340°C à 360°C pour amener le point de ramollissement du brai à une valeur de 240-260°C,
- oxydation du brai à une température de 200°C à 240°C, pendant 100 à 200 h,
- pyrolyse du brai sous gaz inerte à la pression atmosphérique, et
- graphitation.

Dans ce cas, on réalise tout d'abord un «mûrissage» thermique du brai pour l'amener à un point de ramollissement d'environ 240°C, puis on l'oxyde à l'air vers 200°C, ce qui a pour effet de le rendre infusible et de lui conférer à la pyrolyse le même comportement qu'une résine. Toutefois, cette méthode nécessite l'utilisation d'un réacteur performant capable de fournir un bon vide et une température de 400°C.

Deux méthodes alternatives à la méthode précédente peuvent être utilisées.

La première technique s'applique lorsque le substrat est un substrat 2D réalisé parle drapage. Elle comporte les étapes suivantes :

a) : réalisation d'un préimprégné, les tissus sont imprégnés dans le brai mûri.

b) : empilement du préimprégné sur une forme et pressage vers 270°C.

c) : oxydation du brai pour le rendre infusible sous air à 200°C pendant 100 h.

d) : pyrolyse à la pression atmosphérique.

La deuxième technique qui s'applique sur une pièce à paroi mince, c'est-à-dire d'une épaisseur de 1 à 5 mm, soit ≤ 5 mm, à un cycle ultérieur d'imprégnation sur un matériau déjà rigidifié par du carbone obtenu à partir de résines organiques ou de brai, comprend les étapes suivantes :

a) imprégnation par du brai liquide et mûrissement du brai ;

b) écroutage du brai ; et

c) pyrolyse ménagée du brai avec un cycle thermique très long de 250°C à 450°C qui permet aux gaz de diffuser en évitant ainsi de créer une pression interne du gaz qui expulserait le brai vers l'extérieur du renfort fibreux.

Selon l'invention, le constituant carboné de la matrice peut être formé par des techniques mixtes en réalisant par exemple un premier cycle d'imprégnation par une résine organique, puis un ou plusieurs cycles d'imprégnation à partir de brai et ou de résine organique. On peut aussi commencer par un premier cycle d'imprégnation au moyen de brai suivi de cycles d'imprégnation au moyen de résine organique et/ou de brai.

Ce mode de fabrication du constituant carboné de la matrice est très avantageux car il permet de régler à la valeur souhaitée la porosité de la préforme carbone poreuse, soit la quantité de constituant métallique qui pourra être incluse ultérieurement, et de contrôler ainsi les propriétés finales du matériau composite, telles que sa conductivité thermique, son coefficient de dilation thermique et ses propriétés mécaniques.

Après réalisation de la préforme carbone poreuse, on introduit le second constituant métallique dans la porosité de cette préforme pour la remplir au moins en partie de ce constituant métallique et former la matrice mixte du matériau composite.

Cette introduction peut être réalisée par infiltration du second constituant métallique en phase liquide sous pression, par exemple par compression isostatique sous basse pression (70 à 100 bars).

Généralement, on réalise cette opération de la façon suivante.

On place la préforme carbone poreuse dans une enceinte et on la chauffe à la température voulue, puis on introduit sous pression dans l'enceinte le constituant métallique préchauffé à la température souhaitée afin de réaliser l'infiltration de la préforme par le constituant métallique liquide. On procède ensuite au refroidissement, puis à une dépressurisation de l'enceinte.

Les températures du constituant métallique fondu et de la préforme chauffée sont choisies en fonction de la nature du constituant métallique utilisé. Généralement, pour limiter les réactions aux interfaces avec le carbone, on limite la température de la préforme lors de l'infiltration. Afin de conserver une mouillabilité suffisante de la matrice de carbone par le constituant métallique, celui-ci est surchauffé avant l'infiltration. Dans le cas d'un second constituant métallique constitué par un alliage d'aluminium et de magnésium, on peut utiliser les conditions d'infiltration suivantes :

- température du constituant métallique : 700°C,
- température de la préforme : 650°C.
- pression maximale : 6 MPa.
- vitesse moyenne de refroidissement : 75°C min$^{-1}$.

D'autres caractéristiques et avantages de l'invention apparaîtront mieux à la lecture des exemples suivants, donnés bien entendu à titre illustratif et non limitatif, en référence aux dessins annexés.

**Brève description du dessin**

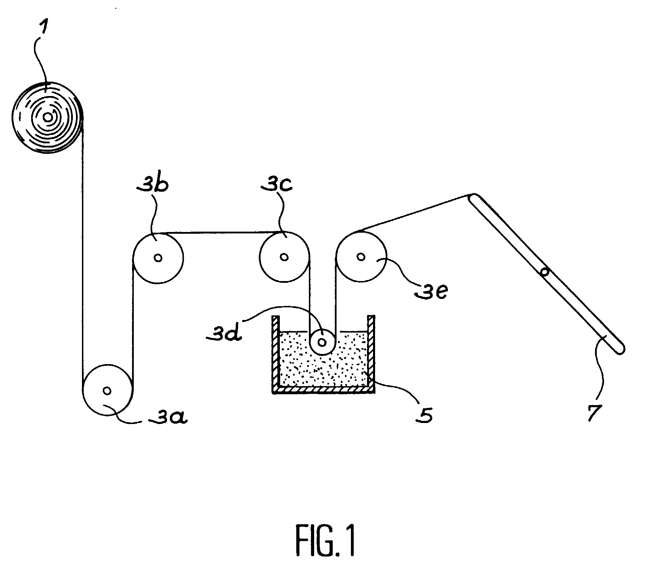

La figure 1 représente schématiquement le dispositif utilisé pour la réalisation d'une nappe préimprégnée de fibres de carbone unidirectionnelles.

**Exposé détaillé des modes de réalisation**

Les exemples qui suivent illustrent la fabrication de matériaux composites destinés à des utilisations spatiales conformément à l'invention.

**Exemple 1**

Dans cet exemple, on prépare un matériau composite à partir d'un renfort de fibres de carbone unidirectionnelles obtenues à partir de brai, en formant le constituant carboné de la matrice à partir d'une résine organique en une seule étape, puis en infiltrant la préforme poreuse avec un alliage d'aluminium et de magnésium.

Les fibres de carbone utilisées sont des fibres ex-brai de très haut module (fibres K135 2U commercialisées par Mitsusbishi Kasei). Elles ont une densité de 2,14, un module d'Young E de 624 GPa, une charge de rupture de 3472 MPa et un allongement correspondant de 1,7 %.

On traite tout d'abord les fibres chimiquement et thermiquement sous atmosphère neutre pour réaliser un désensimage, puis on les imprègne de résine en les faisant passer dans un bain contenant une solution alcoolique de résine phénolique de type Ablaphène RA101 fournie par Rhône Poulenc.

C'est une résine formophénolique, type Résol, en solution aqueuse, qui présente les caractéristiques suivantes :

| | |
|---|---|
| Viscosité à 20°C (CP) | 700-850 |
| Densité à 20°C | env. 1,20 |
| Extrait sec à 160°C (%) | 67-73 |
| pH | 7,5-8,1 |
| Phénol libre (%) | 19-22 |
| Temps de gel à 125°C(min.) | 22-30 |
| Taux de coke (%) | env. 59 |

Sur la figure 1, on a représenté la technique utilisée pour cette imprégnation. Sur cette figure, on voit que les fibres initialement enroulées sur un mandrin cylindrique 1, sont déroulées et transférées par un système de poulies (3a, 3b, 3c, 3d, 3e) dans un réservoir 5 contenant la solution alcoolique de résine. A la sortie du réservoir, elles sont directement bobinées sur un mandrin plat 7 téflonné pour former des nappes de fibres unidirectionnelles.

Après un séchage en étuve à 60°C, puis une gélification de 15 minutes à 100°C, on presse la nappe à l'aide d'un rouleau de téflon avant de la découper, puis de la stocker entre des feuilles de plastique gaufrées. Le taux de résine est d'environ 40 % en poids.

On empile ensuite les nappes pour obtenir un renfort d'épaisseur voulue, en respectant la symétrie miroir, c'est-à-dire en alternant simplement les nappes situées du côté du mandrin, puis du côté externe. On réalise ainsi un empilement de quatre nappes que l'on soumet à un pressage sous vide. On obtient ainsi un taux de fibres de carbone de 70 %.

On soumet alors l'ensemble à un cycle de cuisson réalisé de la manière suivante :

- montée à 60°C à une vitesse de 3°C par minute, puis palier de 2 heures à 60°C,
- montée à 80°C à une vitesse de 2°C par minute, puis maintien de cette température pendant 2 heures,
- montée à 100°C à une vitesse de 1°C par minute, puis maintien de cette température pendant 1 heure,
- montée à 120°C à une vitesse de 2°C par minute, puis maintien de cette température pendant 2 heures,
- montée à 150°C à une vitesse de 2°C par minute, puis maintien de cette température pendant 30 minutes,
- montée à 180°C à une vitesse de 2°C par minute, puis maintien de cette température pendant 1 heure, et
- refroidissement naturel.

Après ce cycle de cuisson, on procède à la pyrolyse de la résine, qui est effectuée en milieu neutre sous balayage d'azote. Cette pyrolyse est réalisée de la façon suivante :

- montée à une température de 180°C à une vitesse de 5°C par minute,
- montée à 200°C à une vitesse de 2°C par minute,
- montée à 350°C à une vitesse de 1°C par minute, puis maintien de cette température pendant 2 heures,
- montée à 400°C à une vitesse de 0,5°C par minute, puis maintien de cette température pendant 30 minutes,
- montée à 450°C à une vitesse de 0,5°C par minute, puis maintien de cette température pendant 30 minutes,
- montée à 500°C à une vitesse de 0,5°C par minute, puis

- montée à 900°C à une vitesse de 2°C par minute.

On réalise ensuite une graphitation à haute température à 2400°C.

Lors de ce traitement, on ne modifie que très peu les caractéristiques des fibres de carbone qui étaient déjà bien graphitées.

Bien que la matrice de carbone vitreux ne soit pas graphitable, la différence de dilatation entre les fibres et la matrice génère des contraintes qui provoquent une graphitation de la zone interfaciale et réduisent l'adhérence entre les fibres et la matrice. Par ailleurs, ce traitement augmente la microfissuration de la matrice et contribue ainsi à ouvrir les porosités. Le taux de porosité ouverte du matériau passe alors de 19 à 21 % après ce traitement de graphitation.

La préforme poreuse ainsi obtenue présente une densité de 1,68.

On procède alors à son infiltration par de l'aluminium en utilisant un alliage d'aluminium et de magnésium AG10 fourni par la Société Brefond, qui contient 10 % en poids de magnésium.

L'emploi de cet alliage permet d'obtenir une température de fusion de l'alliage inférieure à celle de l'aluminium pur (600°C pour l'alliage au lieu de 660°C pour l'aluminium pur), d'atténuer les réactions chimiques à l'interface fibre-matrice car le magnésium est inerte vis-à-vis du carbone et d'obtenir une densité inférieure à celle de l'aluminium (2,57 pour l'alliage au lieu de 2,7 pour l'aluminium).

Les conditions utilisées pour cette infiltration sont les suivantes :

- température du constituant métallique : 700°C
- température de la préforme : 650°C
- pression maximale : 6 Mpa
- vitesse moyenne de refroidissement : 75°C.min$^{-1}$.

Le matériau composite obtenu comprend :

- 60 % de renfort fibreux
- 19 % de carbone, et
- 19,3 % de constituant métallique.

On détermine la densité du matériau avant et après infiltration, ainsi que la conductivité thermique dans le plan et le sens travers, son module d'Young E et sa contrainte à la rupture σ.

La conductivité thermique est mesurée à partir des caractéristiques suivantes :

- diffusivité thermique à partir d'une pastille d'un diamètre de 16 ± 0,5 mm en effectuant une mesure sous vide entre 20 et 100°C,
- capacité thermique massique Cp à partir d'une pastille d'un diamètre de 4,9 ± 0,1 mm en réalisant la mesure sous azote avec une cinétique de 5°C.min$^{-1}$ (entre 20 et 100°C), et
- la masse volumique ρ à 20°C.

La conductivité thermique k est déduite de la relation suivante :

$$k = a \times \rho \times Cp$$

Les mesures ont été effectuées dans le sens travers, donc dans le sens perpendiculaire aux fibres et dans le plan donc dans le sens des fibres. Les résultats obtenus sont données dans le tableau 1 annexé.

On détermine également les caractéristiques mécaniques du matériau en le testant en flexion 4 points pour le module d'Young et la contrainte à la rupture (appui 60-20 mm) et en flexion à appuis rapprochés pour la résistance au cisaillement interlaminaire (appuis 10 mm). Les résultats obtenus sont donnés dans le tableau 1 annexé.

**Exemple 2**

Dans cet exemple, on prépare un matériau composite a renfort carboné à partir de fibres ex-brai K135 identiques à celles de l'exemple 1, en réalisant la préforme poreuse de la même façon que dans l'exemple, mais en effectuant de plus un second cycle d'imprégnation au moyen de brai et en réalisant ensuite l'infiltration du constituant métallique comme dans l'exemple 1.

On suit le même mode opératoire que dans l'exemple 1 pour former une préforme poreuse comprenant un renfort de fibres carbonées ex-brai unidirectionnelles, imprégnées de résine phénolique de type RA101 que l'on soumet à un pressage et à une pyrolyse dans les mêmes conditions que celles de l'exemple 1. Après pyrolyse, on soumet la préforme poreuse à un nouveau cycle de densification au moyen de brai.

Dans ce but, on dispose la préforme dans un bac avec du brai concassé en quantité suffisante pour permettre l'immersion complète de la préforme dans le brai fondu. On place alors le bac dans une étuve à vide où est réalisé l'infiltration, en maintenant une pression inférieure à 500Pa, à 250°C, pendant 1 heure.

Après refroidissement du brai, on dégage la préforme de la gangue de brai et on la place dans un four pour subir le cycle de pyrolyse suivant :

- montée à 200°C à une vitesse de 10°C par minute, puis maintien de cette température pendant 1 heure,
- montée à 350°C à une vitesse de 1°C par minute, puis maintien de cette température pendant 5 heures,
- montée à 380°C à une vitesse de 1°C par minute, puis maintien de cette température pendant 5 heures,
- montée à 400°C à une vitesse de 1°C par minute, puis maintien de cette température pendant 5 heures,
- montée à 420°C à une vitesse de 1°C par minute, puis maintien de cette température pendant 3 heures,
- montée à 440°C à une vitesse de 1°C par minute, puis maintien de cette température pendant 3 heures, et
- montée à 900°C à une vitesse de 5°C par minute.

On soumet ensuite le matériau à une graphitation à 2400°C, on obtient aussi un taux de porosité de la préforme poreuse de 10 % après redensification par le brai alors qu'il était de 21 % dans l'exemple 1. La densité de la préforme est de 1,9 et le taux de fibres est de 46 %.

On réalise ensuite l'opération d'infiltration de la préforme par l'alliage Al-Mg dans les mêmes conditions que celles de l'exemple 1.

On obtient ainsi un matériau composite contenant :

- 46 % de fibres,
- 44 % de carbone, et
- 9 % d'alliage AlMg.

Les propriétés du matériau obtenu sont données dans la tableau 1.

**Exemple 3**

Cet exemple illustre la réalisation d'un matériau composite comprenant un renfort constitué d'un tissu bidimensionnel de fibres de carbone obtenues à partir de polyacrylonitrile (ex-PAN) dans une matrice mixte de carbone obtenu à partir de résine RA101 et d'alliage aluminium-magnésium.

Les fibres utilisées dans cet exemple sont des fibres T300 de haute résistance fabriquées par Toray à partir de polyacrylonitrile. Le renfort est formé de nappes de tissu qui est un satin de 5 élaboré à partir de cette fibre T300K (3000 filaments par mèche). Les propriétés de la fibre de départ sont les suivantes :

- densité : 1,76
- module d'Young : 230 GPa
- charge à la rupture : 3530 MPa
- allongement à la rupture : 1,5 %.

On imprègne tout d'abord le tissu de carbone dans une solution à 75 % en poids de résine RA101 et 25 % en poids d'éthanol.

Après essorage, séchage et gélification pendant 15 minutes à 100°C, on obtient un pré-imprégné contenant environ 40 % de résine et 6 % en masse de matière volatile. On empile 4 nappes de tissu en respectant la symétrie miroir comme dans l'exemple 1, puis on soumet l'empilement à un pressage de façon à avoir un taux de fibres de 65 % et à une cuisson réalisées de la façon suivante.

On préchauffe la presse à 80°C, et on la maintient à 80°C pendant 10 minutes après fermeture, puis on monte à 120°C en 1 heure, et à 180°C en 1 heure (vitesse de 1°C par minute).

On réalise ensuite la pyrolyse et la graphitation dans les mêmes conditions que celles de l'exemple 1. On obtient ainsi une préforme poreuse ayant une teneur en fibre de 60 %, une densité de 1,4 et une porosité ouverte avant graphitation de 22 % et de 26 % après graphitation.

On réalise enfin l'infiltration du constituant métallique dans les mêmes conditions que celles de l'exemple 1.

Le matériau composite obtenu comprend :

- 60 % de fibres,
- 14 % de carbone, et

- 24,5 % d'alliage aluminium-magnésium,

Les propriétés de ce matériau sont données dans le tableau 1.

**Exemple 4**

Cet exemple illustre la fabrication d'un matériau composite comportant un renfort en tissu bidimensionnel de fibres de carbone ex-PAN, et une matrice mixte de coke obtenu à partir de résine RA101 et d'alliage aluminium-magnésium.

Dans cet exemple, on suit le même mode opératoire que dans l'exemple 3, mais on réalise un deuxième cycle d'imprégnation par la résine phénolique RA101 après le premier cycle d'imprégnation et de pyrolyse de cette résine, et avant la graphitation.

Dans ce but, on imprègne la préforme poreuse obtenue dans l'exemple 3, avant graphitation, au moyen de résine phénolique RA101 mûrie et déshydratée, à 60°C sous vide pendant environ 4 heures. On retire alors la préforme du bac d'imprégnation, on l'égoutte, puis on la soumet à une cuisson dans les conditions suivantes, qui sont identiques à celles de l'exemple 1.

- montée à 60°C à une vitesse de 3°C par minute, puis maintien de cette température pendant 2 heures,
- montée à 80°C à une vitesse de 2°C par minute, puis maintien de cette température pendant 2 heures,
- montée à 100°C à une vitesse de 1°C par minute, puis maintien de cette température pendant 1 heure,
- montée à 120°C à une vitesse de 2°C par minute, puis maintien de cette température pendant 2 heures,
- montée à 150°C à une vitesse de 2°C par minute, puis maintien de cette température pendant 30 minutes,
- montée à 180°C à une vitesse de 2°C par minute, puis maintien de cette température pendant 1 heure, et
- refroidissement naturel.

On soumet alors le matériau à une pyrolyse, puis à une graphitation à 2400°C et à une infiltration par l'alliage aluminium-magnésium comme dans l'exemple 1.

Après graphitation, la préforme a une porosité ouverte de 15 % (26 % dans l'exemple 3) alors qu'elle était de 14 % avant graphitation (22 % dans l'exemple 3). La densité de la préforme poreuse est de 1,55.

Le matériau composite obtenu comprend :

- 50 % de fibres,
- 35 % de carbone, et
- 14 % d'alliage aluminium-magnésium.

Les propriétés de ce matériau sont données dans le tableau 1.

**Exemple 5**

Cet exemple illustre la fabrication d'un matériau composite à partir d'un renfort de fibres de carbone T300J sous la forme d'un tissu 2,5D avec une matrice mixte de carbone obtenu à partir de brai et d'alliage aluminium-magnésium.

La fibre de carbone utilisée est une fibre T300J de haute résistance obtenue à partir de polyacrylonitrile (ex-PAN) fabriquée par Toray.

On met ces fibres sous la forme d'un tissu 2,5D formé de 7 couches, en utilisant la technique décrite dans FR-A-2 610 951 et des fibres T300J-6K (6000 filaments par mèche). Les propriétés de cette fibre sont les suivantes :

- densité : 1,78
- module d'Young : 230 GPa
- charge à la rupture : 4210 MPa
- allongement à la rupture : 1,8 %.

Cette fibre subit une graphitation partielle à 2400°C avant la réalisation du tissu 2,5 D, sa densité passe alors de 1,78 à 1,94, et son module d'Young de 230 à 400 GPa.

On réalise ensuite la matrice de carbone à partir de brai en disposant le renfort tissé dans un carcan constitué de grilles permettant de compacter légèrement le renfort pour empêcher son défibrage dans le brai liquide. On dispose l'ensemble dans un bac d'imprégnation avec du brai concassé et on place le bac dans une étuve sous vide où est réalisé l'imprégnation par le brai, à 250°C sous une pression inférieure à 500 Pa. Après imprégnation, on démoule le matériau, on le détoure et on l'écroûte. On réalise ensuite le mûrissement du brai dans un four sous balayage d'azote en opérant de la façon suivante :

- montée à 250°C à une vitesse de 10°C par minute, puis maintien de cette température pendant 1 heure,
- montée à 300°C à une vitesse de 1°C par minute, puis maintien de cette température pendant 2 heures,
- montée à 350°C à une vitesse de 1°C par minute, puis maintien de cette température pendant 2 heures, et
- montée à 380°C à une vitesse de 0,5°C par minute, puis maintien de cette température pendant 3 heures.

On détermine grossièrement le point de ramollissement en mesurant la température à laquelle une pointe métallique peut être enfoncée dans la préforme, soit vers environ 250°C.

On presse ensuite le matériau sous presse à chaud à 260°C. A cette température, compte tenu de son point de ramollissement vers 250°C, le brai reste très visqueux, ce qui évite le risque d'essorage du matériau. Le brai étant en excès, le pressage est réalisé entre des grilles qui permettent d'évacuer le brai qui flue, on obtient ainsi un taux de porosité nul.

On soumet ensuite le brai à une oxydation. Elle est réalisée à 200°C à l'air pendant 100 heures. Cette température est suffisamment basse pour que le retrait du brai provoque une abondante fissuration de celui-ci, et elle est suffisamment élevée pour que la cinétique d'oxydation ne soit pas trop faible.

On réalise ensuite une pyrolyse dans un four sous balayage d'azote en opérant de la façon suivante :

- Montée à 280°C à une vitesse de 7 ° par minute, puis maintien de cette température pendant 2 heures,
- montée à 300°C à une vitesse de 2°C par minute, puis maintien de cette température pendant 2 heures,
- montée à 350°C à une vitesse de 5°C par minute, puis maintien de cette température pendant 2 heures,
- montée à 450°C à une vitesse de 3°C par minute, puis maintien de cette température pendant 2 heures, et
- montée à 900°C à une vitesse de 3°C par minute.

Après pyrolyse, le matériau présente un taux de fibres de 50 %. On réalise ensuite une graphitisation à 2400°C, comme dans l'exemple 1. La porosité du matériau augmente du fait de la graphitation de la matrice de carbone, comme on peut voir ci-dessous.

|  | 2.5 D avant graphitation | 2.5D après graphitation |
|---|---|---|
| taux de fibre | 50 % | 50 % |
| densité apparente | 1,40 | 1,40 |
| porosité ouverte mesurée | 20 % | 23 % |

On réalise ensuite l'infiltration de la matrice par l'alliage aluminium-magnésium dans les mêmes conditions que celles des exemples précédents.

Les caractéristiques du matériau composite obtenu sont données dans le tableau 1. Ce matériau comprend :

- 50 % de fibres de carbone,
- 27 % de carbone, et
- 22 % d'alliage aluminium-magnésium.

Le coefficient de dilation thermique de ce matériau est de $2,6.10^{-6}.°C^{-1}$ entre 30 et 80°C.

Les résultats des exemples 1 à 5 montrent l'intérêt de la matrice mixte carbone-métal de l'invention, qui permet de contrôler les propriétés du matériau obtenu. En effet, la porosité des préformes poreuses peut être maîtrisée lors des cycles d'imprégnation par des résines et/ou du brai, ce qui permet de contrôler la quantité de métal qui sera ensuite infiltrée pour former la matrice mixte.

Dans le tableau 2 joint, on a donné les caractéristiques mécaniques des matériaux conformes à l'invention ainsi que celles de matériau de l'art antérieur comprenant un renfort de fibres de carbone quasi-unidimensionnelles ou bidimensionnelles 2D dans une matrice d'aluminium, et celles de matériaux carbone-carbone dans lesquels le renfort est bidimensionnel ou 2,5D. Au vu de ce tableau, on remarque que l'on peut améliorer la conductivité thermique, le module élastique et la contrainte de cisaillement interlaminaire, en utilisant la matrice mixte de l'invention.

**Exemple 6**

On suit le même mode opératoire que dans l'exemple 1 pour préparer un matériau composite à partir des mêmes fibres ex-brai K135-2U sous la forme de tissu quasi unidirectionnel (90 % dans le sens chaîne et 10 % dans le sens trame) que l'on drape selon la séquence [0°/32°/0°/0°/-32°/0°]. On forme la matrice de carbone à partir de la résine RA 101 et on réalise la graphitation à 2 400°C. On infiltre ensuite l'alliage d'aluminium et de magnésium AG10.
On obtient ainsi un matériau composite comprenant :

-   57 % de fibres ex-brai,
-   13 % de matrice carbonée obtenue à partir de la résine RA101, et
-   30 % de matrice en alliage AG10.

Le coefficient de dilatation thermique mesurée de ce matériau est de $0,08.10^{-6}$ °$C^{-1}$ dans le sens X qui correspond au sens des fibres des nappes à 0°.

**Exemple 7**

On prépare comme dans l'exemple 3 un matériau composite comportant un renfort de fibres T 300 graphitées sous forme de nappes de tissu (satin de 8), puis on forme la matrice de carbone à partir de la résine RA 101 et on infiltre ensuite l'alliage aluminium-magnésium AG10.
On obtient un matériau composite comprenant :

-   60 % de fibres,
-   14 % de matrice carbonée, et
-   26 % de matrice en alliage AG 10.

On soumet ensuite deux échantillons de ce matériau ayant les dimensions suivantes : 20 mm x 10 mm x 2 mm à un essai de résistance à l'oxygène monoatomique dans les conditions suivantes.
Les atomes d'oxygène sont produits à partir d'une source laser pulsée (1-4 Hertz) et possèdent une vitesse qui peut varier de 7 à 13 $Km.s^{-1}$. Les échantillons sont placés sur une surface plane (25 cm de diamètre) perpendiculaire à l'axe de la tuyère où sont produits les atomes d'oxygène.
La fixation des échantillons est assurée par des pattes en clinquant d'aluminium qui recouvrent une faible partie de la surface des échantillons. La partie recouverte est prise en compte pour le calcul de la surface lors du dépouillement des essais.
Le bombardement a été effectué en quatre étapes et les fluences cumulées déterminées après chaque exposition sont données dans le tableau qui suit.

Tableau

| Etape | Fluence cumulée |
|---|---|
| 1 | $6,2 \times 10^{18}$ atomes $cm^{-2}$ |
| 2 | $5,39 \times 10^{19}$ atomes $cm^{-2}$ |
| 3 | $1,0 \times 10^{20}$ atomes $cm^{-2}$ |
| 4 | $2,2 \times 10^{20}$ atomes $cm^{-2}$ |

Dans des conditions moyennes d'activité solaire, la fluence reçue par une face perpendiculaire au vecteur vitesse, pendant une durée de 10 ans, à une altitude de 400 km est de l'ordre de $3,2 \times 10^{20}$ atomes $cm^{-2}$. Les durées de l'essai sol étant beaucoup trop importantes pour simuler l'exposition d'orbite, le niveau de fluence final a été choisi de façon à donner une tendance significative de la susceptibilité du matériau vis-à-vis de l'oxygène atomique.
Après ces essais, on détermine la masse des échantillons, leur érosion et leur réactivité.
La réactivité correspond au rapport de l'érosion sur la fluence.
Les résultats obtenus sont donnés dans le tableau 3 annexé.
Les résultats du tableau 3 montrent que ces matériaux composites sont très peu réactifs avec l'oxygène monoatomique. Une fois que l'aluminium de surface a été passivé, la réactivité devient quasiment nulle.

TABLEAU 1

| Ex | Fibres | Renfort | Matrice C | Masse volumique | Porosité (%) | Module d'Young E(GPa) | Contrainte à la rupture (flexion 4 points) σ(MPa) | Contrainte de cisaillement τ(MPa) | Conductivité thermique (W/m.°C) Plan | travers |
|---|---|---|---|---|---|---|---|---|---|---|
| 1 | ex-brai K135 2U | unidirectionnel | Résine RA101 | 2,23 | 1,7 | 376 | 525 | 30 | 352,4 | 15,3 |
| 2 | Ex-brai K135 2U | " | Résine RA101 brai | 2,30 | 1 | 356 | 560 | 28 | 414 | 20,8 |
| 3 | Ex-Pan T300 | Tissu 2D | Résine RA101 | 2,05 | 1,5 | 120 | 440 | 31 | 73 | 19,3 |
| 4 | Ex-Pan T300 | Tissu 2D | Résine RA101 | 2,06 | 1 | 114 | 393 | 23 | 150 | 20,5 |
| 5 | Ex-Pan T300 | Tissu 2,5 D | Brai | 1,99 | 1 | 73 | 391 | 21 | non mesurée | |

TABLEAU 2

| Matériau composite | Densité | Module d'Young E (Gpa) | Contrainte à la rupture $\sigma$R(MPa) (flexion 4 points) | Contrainte de cisaillement $\tau$(MPa) |
|---|---|---|---|---|
| Invention (ex 1 à 5) | 1,99 - 2,30 | 73 - 376 | 391 - 560 | 21 - 31 |
| Renfort en fibres de carbone quasi UD dans une matrice Al | 2,3 | 300 | 688 | 48 |
| Renfort tissu 2D de fibres de C dans une matrice Al. | 2,3 | 104 (L) 27 (T) | 297 (L) 103 (T) | 94 |
| Renfort tissu de fibres de carbone 2D dans une matrice de carbone | 1,6 | 90 | 200 | 14-18 |
| Renfort en tissu de fibres de carbone 2,5D dans une matrice de carbone | 1,6 | 93 | 232 (sens chaîne) | 10 |

L : Longitudinal
T : Travers

Tableau 3

| | | | Ech. 1 | Ech. 2 |
|---|---|---|---|---|
| Masse spécifique (g/cm$^3$) | | | 2,03 | 2,02 |
| Surface exposée (cm$^2$) | | | 1,81 | 1,86 |
| Masse avant exposition (mg) | | | 811,74 | 809,01 |
| Masse après l'étape 1 (variation par rapport à l'origine) (mg) | | | 811,77 (0,03) | 808,96 (-0,05) |
| Masse après l'étape 2 (variation par rapport à l'origine) (mg) | | | 811,70 (-0,04) | 808,87 (-0,14) |
| Masse après l'étape 3 (variation par rapport à l'origine) (mg) | | | 811,69 (-0,05) | 808,87 (-0,14) |
| Masse après l'étape 4 (variation par rapport à l'origine) (mg) | | | 811,70 (-0,04) | 808,87 (-0,15) |
| Erosion ($\mu$m) après l'étape 1 | | | 0,08 | -0,13 |
| Erosion ($\mu$m) après l'étape 2 | | | -0,11 | -0,37 |
| Erosion ($\mu$m) après l'étape 3 | | | -0,14 | -0,37 |
| Erosion ($\mu$m) après l'étape 4 | | | -0,11 | -0,40 |
| Variation de masse surfacique (mg/cm$^2$) après l'étape | | 1 | 0,02 | -0,03 |
| | | 2 | -0,02 | -0,08 |
| | | 3 | -0,03 | -0,08 |
| | | 4 | -0,02 | -0,08 |

Tableau 3 (suite)

| | | Ech. 1 | Ech. 2 |
|---|---|---|---|
| Réactivité (cm³/at) après l'étape | | $1,3.10^{-24}$ | $-2,1.10^{-24}$ |
| | 1 | $-4,0.10^{-25}$ | $-5,0.10^{-25}$ |
| | 2 | $-5,5.10^{-26}$ | $0^{-}$ |
| | 3 | $-2,3.10^{-26}$ | $-2,3.10^{-26}$ |
| | 4 | | |
| Réactivité globale | | $-4,9.10^{-26}$ | $-1,8.10^{-25}$ |

## Revendications

1. Utilisation d'un matériau composite comprenant un renfort fibreux de fibres carbonées disposé dans une matrice mixte comprenant un premier constituant carboné et un second constituant métallique, pour la réalisation de composants de plate-formes, satellites et engins spatiaux.

2. Utilisation selon la revendication 1, dans laquelle le composant est exposé à de l'oxygène atomique.

3. Utilisation selon la revendication 1, dans laquelle le second constituant métallique est un métal, un alliage métallique ou un composé intermétallique.

4. Utilisation selon la revendication 1 ou 2, dans laquelle le second constituant métallique est l'aluminium ou un alliage d'aluminium et de magnésium.

5. Utilisation selon l'une quelconque des revendications 1 à 4, dans laquelle la teneur en second constituant métallique est de 0,5 à 60 % en volume par rapport au volume dudit matériau.

6. Utilisation selon l'une quelconque des revendications 1 à 4, dans laquelle le matériau composite comprend en volume :

   - 40 à 70 % de renfort fibreux,
   - 10 à 45 % du premier constituant carboné de la matrice, et
   - 5 à 35 % du second constituant métallique de la matrice.

7. Utilisation selon l'une quelconque des revendications 1 à 6, dans laquelle la teneur en second constituant métallique est telle que le coefficient de dilatation thermique du matériau composite est dans la gamme allant de 0 à $10^{-7}.°C^{-1}$.

8. Utilisation selon l'une quelconque des revendications 1 à 7, dans laquelle le renfort fibreux est constitué de fibres de carbone unidirectionnelles ou quasi-unidirectionnelles, birectionnelles ou multidirectionnelles, ou d'un substrat tissé de fibres de carbone.

9. Utilisation selon la revendication 8, dans laquelle les fibres de carbone proviennent de précurseurs de polyacrylonitrile ou de brai.

10. Utilisation selon l'une quelconque des revendications 1 à 9, dans laquelle le constituant carboné est du carbone graphité obtenu par pyrolyse et graphitation d'une résine organique thermodurcissable et/ou de brai.

11. Utilisation selon la revendication 7, dans laquelle le matériau composite comprend 57 % de fibres de carbone provenant de brai, 13 % de constituant carboné formé par pyrolyse et graphitation d'une résine formophénolique et 30 % d'alliage d'aluminium et de magnésium comprenant 10 % en poids de magnésium.

12. Utilisation selon la revendication 1 ou 2, dans laquelle le matériau composite comprend 60 % de fibres de carbone, 14 % de matrice carbonée et 26 % d'alliage d'aluminium et de magnésium comprenant 10 % en poids de magnésium.

**13.** Utilisation selon l'une quelconque des revendications 1 à 10, dans laquelle matériau composite est préparé par un procédé comprenant les étapes suivantes :

    a) préparer une préforme de matériau composite poreuse, du type carbone-carbone, comportant un renfort fibreux de fibres carbonées disposé dans une matrice du premier constituant carboné, ayant une porosité de 0,5 à 60 %, et
    b) introduire le second constituant métallique dans la porosité de la préforme obtenue en a) pour la remplir au moins en partie de ce second constituant métallique.

**14.** Utilisation selon la revendication 13, dans laquelle on prépare la préforme de matériau composite poreuse en réalisant au moins un cycle d'imprégnation comportant l'imprégnation d'un renfort fibreux de fibres carbonées au moyen d'une résine organique thermodurcissable suivie d'une pyrolyse de la résine, et en réalisant ensuite une graphitation.

**15.** Utilisation selon la revendication 13, dans laquelle on prépare la préforme de matériau composite poreuse en réalisant au moins un cycle d'imprégnation comportant l'imprégnation d'un renfort fibreux de fibres carbonées au moyen de brai liquide, suivie d'une pyrolyse du brai, et en réalisant ensuite une graphitation.

**16.** Utilisation selon la revendication 15, dans laquelle après imprégnation par le brai et avant pyrolyse, on soumet le brai à un traitement de mûrissement thermique suivi d'un traitement d'oxydation.

**17.** Utilisation selon l'une quelconque des revendications 13 à 16, dans laquelle le renfort fibreux est obtenu à partir de fibres de carbone issues de précurseurs constitués par du polyacrylonitrile ou du brai.

**18.** Utilisation selon la revendication 14, dans laquelle la résine organique thermodurcissable est une résine formophénolique.

FIG.1

**Office européen des brevets**

# RAPPORT DE RECHERCHE EUROPEENNE

Numéro de la demande

EP 98 40 0049

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 673 900 A (THE B.F. GOODRICH COMPANY) 27 septembre 1995 * page 3, ligne 1 - ligne 23; revendications 1-8,12-17 * --- | 1-18 | C04B35/83 C04B41/88 |
| A | US 4 986 943 A (P.M. SHEAFFER, ET AL.) 22 janvier 1991 * abrégé; revendications 1,2 * * colonne 5, ligne 47 - ligne 65 * * colonne 7, ligne 1 - ligne 30 * --- | 1,2,16 | |
| A | FR 2 546 878 A (J.-P. SLONINA) 7 décembre 1984 * revendications 1-5,7; exemple 2 * --- | 1-15,17, 18 | |
| A | PATENT ABSTRACTS OF JAPAN vol. 013, no. 575 (C-667), 19 décembre 1989 & JP 01 239059 A (NKK CORP.), 25 septembre 1989 * abrégé * ----- | 1,2,16 | |

**DOMAINES TECHNIQUES RECHERCHES (Int.Cl.6)**

C04B

Le présent rapport a été établi pour toutes les revendications

| Lieu de la recherche | Date d'achèvement de la recherche | Examinateur |
|---|---|---|
| LA HAYE | 7 avril 1999 | Hauck, H |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 40 0049

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-1999

| Document brevet cité au rapport de recherche | Date de publication | Membre(s) de la famille de brevet(s) | Date de publication |
|---|---|---|---|
| EP 673900 A | 27-09-1995 | JP 8037258 A | 06-02-1996 |
| US 4986943 A | 22-01-1991 | AUCUN | |
| FR 2546878 A | 07-12-1984 | AUCUN | |

EPO FORM P0460

Pour tout renseignement concernant cette annexe : voir Journal Officiel de l'Office européen des brevets, No.12/82